# EUROPEAN PATENT SPECIFICATION

(11) **EP 3 495 512 B1**
(45) Date of publication and mention of the grant of the patent: **05.01.2022**
(21) Application number: 16911715.7
(22) Date of filing: 30.09.2016
(51) Int. Cl.: C21B 13/00, C21B 13/14, H05B 6/36, H05B 6/42, F27D 11/06, F27D 17/00

(54) **MOLTEN IRON MANUFACTURING APPARATUS AND MOLTEN IRON MANUFACTURING METHOD**
HERSTELLUNGSVORRICHTUNG FÜR EISENSCHMELZE UND HERSTELLUNGSVERFAHREN FÜR EISENSCHMELZE
APPAREIL DE FABRICATION DE FER FONDU ET PROCÉDÉ DE FABRICATION DE FER FONDU

(30) Priority: 05.08.2016 KR 20160099995
(43) Date of publication of application: 12.06.2019
(73) Proprietor: Posco, Pohang-si, Gyeongsangbuk-do 37859 (KR)
(72) Inventor: SHIN, Myoung Kyun, Pohang-si Gyeongsangbuk-do 37859 (KR); LEE, Dal Hoi, Pohang-si Gyeongsangbuk-do 37859 (KR)
(74) Representative: Zech, Stefan Markus
(86) International application number: PCT/KR2016/010991
(87) International publication number: WO 2018/026054

(56) References cited:
- EP-A1- 1 028 301
- WO-A1-2006/011774
- JP-A- H11 293 316
- KR-A- 20000 029 487
- KR-B1- 100 840 232
- KR-B1- 100 939 268
- KR-B1- 940 008 449
- US-A- 3 941 359
- US-B1- 6 206 948

## Description

### [Technical Field]

The present invention relates to a molten iron manufacturing apparatus and a molten iron manufacturing method.

### [Background Art]

Recently, iron, which accounts for about 60% of the production of iron in the whole world, is produced by a blast furnace process that has been developed since the 14th century. The blast furnace process is a method of manufacturing molten iron by putting cokes, which is manufactured using sintered iron ore and free-burning coal as raw materials, into a blast furnace, blowing oxygen into the blast furnace, and reducing iron ore to iron.

The blast furnace process, which is mainly used for facilities for producing molten iron, requires strength at a predetermined level or higher because of reaction characteristics thereof, and requires raw materials having grain sizes that can ensure breathability in the furnace. Therefore, a carbon source, which is used as fuel and a reducing agent, depends on cokes made by processing particular coking coal, and an iron source mainly depends on sintered ore made by performing a series of agglomeration processes.

Therefore, because the currently used blast furnace process necessarily requires a facility for preprocessing a raw material such as a facility for manufacturing cokes and a sintering facility, it is necessary to establish an accessorial facility in addition to the blast furnace, and it is also necessary to install an environmental pollution prevention facility for preventing various environmental pollutants that occur from the accessorial facility. Therefore, there are problems in that a large amount of investment costs are incurred and manufacturing costs are rapidly increased.

To solve the problems with the blast furnace process, the steelworks throughout the world make great effort to develop a direct iron ore smelting reduction process in which coal is directly used as fuel and a reducing agent and powdered and lump ore is substituted for the sintered ore and directly used as the iron source to manufacture molten iron.

In the direct iron ore smelting reduction process, reduced iron powder discharged from a reducing furnace is agglomerated and then inputted into a gasification melting furnace, thereby manufacturing molten iron. In this case, the agglomerated high-temperature reduced iron (hot compacted iron (HCI)) needs to move over a significantly long distance before the HCI is inputted into the gasification melting furnace through a conveying device and an input device. Therefore, a large amount of thermal loss occurs toward the periphery while the HCI moves. According to a working result, a temperature of the HCl loaded on the conveying device is about 600 to 700°C, and a temperature of the HCI is about 400 to 500°C before the HCI is inputted into the gasification melting furnace through the input device, such that it is reported that there occurs a decrease in temperature by about 200°C. Therefore, it is necessary to additionally input lump coal into the gasification melting furnace in order to compensate for a loss of HCI sensible heat caused by the thermal loss, which causes a problem of an increase in fuel costs.

Accordingly, to inhibit the increase in fuel costs, it is necessary to compensate for the thermal loss before inputting the HCI into the gasification melting furnace.

WO 2006/011774 A1 relates to an apparatus for manufacturing molten irons by injecting fine carbonaceous materials into a melter-gasifier and a method for manufacturing molten irons using the same. US 6 206 948 B1 describes a metal reduction and melting process which involves the heating of a burden comprising a metal containing component and a carbon containing component in a channel type induction furnace in order to reduce such metal containing component. US 3 941 359 A relates to a method of and apparatus for reducing an oxide of iron which occur in mill scale involves mixing particles of the oxide with particles of a carbonaceous reducing agent and passing the resulting mixing through a conduit disposed in the flue of a furnace, the flue gases which pass through the flue having a temperature sufficiently high to cause the reduction of the oxide by the reducing agent. EP 1 028 301 A1 relates to a method for the treatment of steel making gases in which these gases are burnt, possibly with the addition of natural gas and air, in a post combustion section between the outlet of a gas turbine generator and the inlet to a recuperative boiler, from which the vapor is valorized notably for the production of electrical energy.

### [DISCLOSURE]

### [Technical Problem]

The present invention has been made in an effort to provide a molten iron manufacturing apparatus and a molten iron manufacturing method which are capable of improving thermal efficiency of a gasification melting furnace and reducing coal consumption, thereby improving working efficiency and reducing working costs.

### [Technical Solution]

An aspect of the present invention provides a molten iron manufacturing apparatus including: a gasification melting furnace into which reduced iron and a lump carbon material are inputted to manufacture molten iron; a reducing furnace which is connected to the gasification melting furnace and manufactures reduced iron powder from fine iron ore by using reducing gas discharged from the gasification melting furnace; a storage bin which is connected to the gasification melting furnace and provides the reduced iron to the gasification melting furnace; a heat supply device which is installed on the storage bin and supplies heat to the reduced iron in the storage bin; and a mixing device which is connected to a conveying device and adds a metal-iron-containing substance or a carbon-containing substance to the conveying device.

The molten iron manufacturing apparatus may further include an agglomeration device which is connected to the reducing furnace, agglomerates the reduced iron powder discharged from the reducing furnace, and supplies the agglomerated reduced iron to the storage bin.

The molten iron manufacturing apparatus may further include a conveying device which has one end connected to the agglomeration device and the other end connected to the storage bin and conveys the agglomerated reduced iron from the agglomeration device to the storage bin.

The heat supply device supplies heat to the reduced iron in the storage bin through induction heating.

The heat supply device includes: an induction coil which is embedded in a wall of the storage bin; a high-frequency generator which produces high-frequency electric power to be applied to the induction coil; and an electrically conductive wire and a connector which electrically connect the induction coil and the high-frequency generator.

The heat supply device may further include: a coolant supply pipe which is connected to one end of the induction coil; and a coolant discharge pipe which is connected to the other end of the induction coil.

The coolant supply pipe and the coolant discharge pipe may be made of a non-conductive material.

The molten iron manufacturing apparatus may further include an electric power generating device which is connected to the high-frequency generator and produces electric power by recovering energy of exhaust gas discharged from one end of the reducing furnace.

The electric power generating device may include: a high-temperature dust collecting device which is connected to one end of the reducing furnace and removes dust in the exhaust gas; an expansion turbine which is connected to the high-temperature dust collecting device, expands the exhaust gas from which the dust is removed, and generates rotational force; an electric generator which is connected to the expansion turbine and converts the rotational force into electrical energy; and an electric transformer which has one end connected to the electric generator and the other end connected to the high-frequency generator, adjusts a voltage, and supplies the electrical energy to the high-frequency generator.

The storage bin may include: a supply bin which is connected to the conveying device and supplied with the agglomerated reduced iron from the conveying device; a back-pressure-equalization bin which is connected to the supply bin and supplied with the agglomerated reduced iron from the supply bin; and an input bin which has one end connected to the back-pressure-equalization bin and the other end connected to the gasification melting furnace and supplies the agglomerated reduced iron, which is supplied from the back-pressure-equalization bin, to the gasification melting furnace.

The heat supply device may be installed on the back-pressure-equalization bin and supply heat to the agglomerated reduced iron in the back-pressure-equalization bin.

The number of back-pressure-equalization bins may be more than one and the multiple back-pressure-equalization bins may be positioned in parallel and each have one end connected to the supply bin and the other end connected to the input bin.

Another aspect of the present invention provides a molten iron manufacturing method including: manufacturing reduced iron by inputting iron ore into a reducing furnace; manufacturing agglomerated reduced iron by agglomerating the reduced iron; supplying heat to the agglomerated reduced iron; and manufacturing molten iron by supplying the heated agglomerated reduced iron and a lump carbon material to a gasification melting furnace, mixing a metal-iron-containing substance or a carbon-containing substance with the agglomerated reduced iron prior to the supplying of the heat to the agglomerated reduced iron, and supplying generated reducing gas to the reducing furnace.

The supplying of the heat to the agglomerated reduced iron includes supplying heat through induction heating.

The mixed amount of the metal-iron-containing substance or the carbon-containing substance may be equal to or less than 5 weight % based on 100 weight % of a total amount of the agglomerated reduced iron.

The supplying of the heat to the agglomerated reduced iron may use energy, as an energy source, which is recovered from exhaust gas generated in the manufacturing of the reduced iron by inputting the iron ore into the reducing furnace.

The energy recovered from the exhaust gas may be recovered as electrical energy by converting energy generated by expansion of the exhaust gas into rotational force and then converting the rotational force into electrical energy.

The recovered electrical energy may be supplied to a high-frequency generator which applies high-frequency electric power to an induction coil for induction heating.

### [Advantageous Effects]

The exemplary embodiments of the present invention provide the molten iron manufacturing apparatus and the molten iron manufacturing method which are capable of improving thermal efficiency of a gasification melting furnace and reducing coal consumption, thereby improving working efficiency and reducing working costs.

### [Description of the Drawings]

FIG. 1 is a schematic view of a molten iron manufacturing apparatus according to an exemplary embodiment of the present invention.
FIG. 2 is a schematic view more concretely illustrating an induction heating device of the molten iron manufacturing apparatus according to the exemplary embodiment of the present invention.
FIG. 3 is a schematic view illustrating a case in which multiple back-pressure-equalization bins are installed in parallel in the molten iron manufacturing apparatus according to the exemplary embodiment of the present invention.
FIG. 4 is a graph illustrating an effect of raising a temperature of agglomerated reduced iron which is shown by a configuration of the induction heating device of the molten iron manufacturing apparatus according to the exemplary embodiment of the present invention.
FIG. 5 is a graph illustrating an effect of reducing coal consumption which is shown by heating agglomerated reduced iron by the molten iron manufacturing apparatus according to the exemplary embodiment of the present invention.

### [Mode for Invention]

The terms first, second, third, and the like are used to describe various portions, components, regions, layers, and/or sections, but the present invention is not limited thereto. These terms are used only to distinguish any portion, component, region, layer, or section from other portions, components, regions, layers, or sections. Therefore, a first portion, component, region, layer, or section to be described below may be referred to as a second portion, component, region, layer, or section without departing from the scope of the present invention.

The technical terms used herein are used merely for the purpose of describing a specific exemplary embodiment, and not intended to limit the present invention. Singular expressions used herein include plural expressions unless they have definitely opposite meanings. The terms "comprises" and/or "comprising" used in the specification specify features, regions, integers, steps, operations, elements, components, but do not preclude the presence or addition of other particular features, regions integers, steps, operations, elements, and/or components thereof.

Unless otherwise defined, all terms used herein including technical or scientific terms have the same meanings as meanings which are generally understood by those skilled in the art. Terms, which are usually used and defined in dictionaries, shall be construed that they have meanings matching those in the context of a related art, and shall not be construed in ideal or excessively formal meanings unless they are clearly defined in the present application.

The present invention will be described more fully hereinafter with reference to the accompanying drawings, in which exemplary embodiments of the invention are shown. The scope of the present invention is defined in the appended claims.

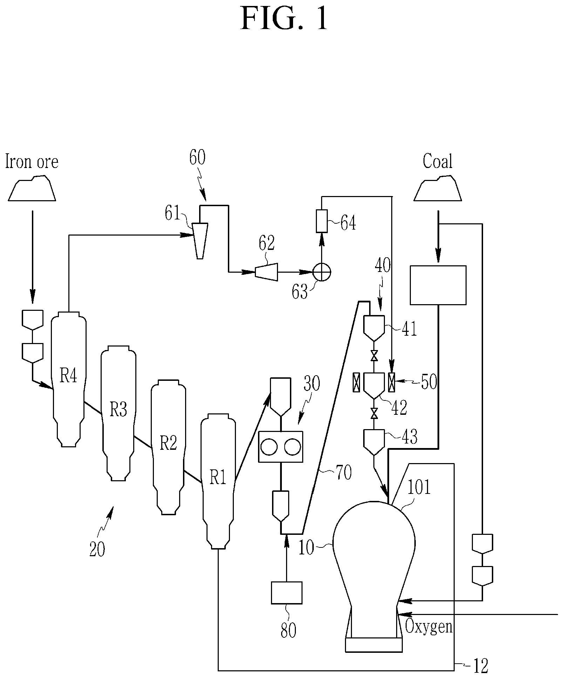

FIG. 1 is a schematic view schematically illustrating a molten iron manufacturing apparatus according to an exemplary embodiment of the present invention. A structure of the molten iron manufacturing apparatus in FIG. 1 is merely for exemplifying the present invention, and the present invention is not limited thereto. Therefore, the molten iron manufacturing apparatus in FIG. 1 may be modified in various forms.

As illustrated in FIG. 1, the molten iron manufacturing apparatus according to the present invention includes a gasification melting furnace 10 into which reduced iron and lump carbon materials are inputted to manufacture molten iron, reducing furnaces 20 which are connected to the gasification melting furnace 10 and manufacture reduced iron powder from fine iron ore by using reducing gas discharged from the gasification melting furnace 10, a storage bin 40 which is connected to the gasification melting furnace 10 and provides the reduced iron to the gasification melting furnace 10, and a heat supply device 50 which is installed on the storage bin 40 and supplies heat to the reduced iron in the storage bin 40.

The heat supply device 50 may compensate for a thermal loss of the reduced iron which occurs while the reduced iron is conveyed to the storage bin 40. Therefore, it is possible to prevent the aforementioned increase in fuel costs caused by an increase in amount of fuel required for the gasification melting furnace 10. The heat supply device 50 may supply heat at a lower cost in comparison with the increase in costs caused by the increase in amount of a lump carbon material (coal and the like) which is fuel of the gasification melting furnace 10. As a non-restrictive example, the heat supply device 50 may use induction heating to be described below. However, any heat supply device may be adopted as long as the heat supply device may supply heat to the reduced iron in the storage bin 40 by using energy supplied from the outside and costs incurred due to the supplied energy are lower than costs incurred due to an increase in fuel costs when there is no supply of heat.

The heat supply device 50 may be installed to be maximally adjacent to the storage bin. For example, all of the configurations may be installed outside the storage bin 40, and some of the configurations may be installed inside the storage bin 40 or recessed into a wall of the storage bin 40, and the other configurations may be installed outside the storage bin 40.

In addition, each of the reducing furnaces 20 may be a fluidized reduction furnace including a fluidized bed, and the multiple reducing furnaces at two or more stages may be included.

The molten iron manufacturing apparatus may further include an agglomeration device 30 which is connected to the reducing furnaces 20, agglomerates the reduced iron powder discharged from the reducing furnace 20, and supplies the agglomerated reduced iron to the storage bin 40. The reduced iron agglomerated by the agglomeration device is supplied to the storage bin 40 and supplied with heat by the heat supply device when the reduced iron is in the storage bin 40, such that a thermal loss, which occurs while the reduced iron is conveyed, is compensated. Thereafter, the reduced iron is inputted into the gasification melting furnace 10 from the storage bin 40, thereby manufacturing molten iron. In this case, as illustrated in FIG. 1, immediately before the reduced iron is inputted into the gasification melting furnace 10, the reduced iron is mixed with fuel such as lump coal for manufacturing molten iron in the gasification melting furnace 10, and the reduced iron and the fuel are simultaneously inputted into the gasification melting furnace 10, such that a thermal loss may be further reduced.

The reduced iron agglomerated by the agglomeration device 30 may be conveyed to the storage bin 40 by a conveying device 70 which has one end connected to the agglomeration device 20 and the other end connected to the storage bin 40, and conveys the agglomerated reduced iron from the agglomeration device 20 to the storage bin 40. In this case, the molten iron manufacturing apparatus may further include a mixing device 80 which is connected to the conveying device 70 and adds a metal-iron-containing substance or a carbon-containing substance to the conveying device 70. The mixing device 80 may add the metal-iron-containing substance or the carbon-containing substance into the conveying device 70 at a start position of the conveying device 70. Therefore, the metal-iron-containing substance or the carbon-containing substance having high electrical conductivity is heated together with the agglomerated reduced iron during the process of heating the agglomerated reduced iron, such that heating efficiency may be improved and heating time may be shortened. This effect may be further maximized in the case in which the heat supply device 50 is the device for supplying heat by using induction heating as described below. Specifically, the metal-iron-containing substance or the carbon-containing substance having high electrical conductivity is heated by induction heating together with the agglomerated reduced iron during the process of heating the agglomerated reduced iron by induction heating, such that it is possible to implement an effect of improving induction heating efficiency and shortening heating time.

Hereinafter, the case in which the heat supply device 50 supplies heat, through the induction heating, to the reduced iron in the storage bin 40 will be described in more detail.

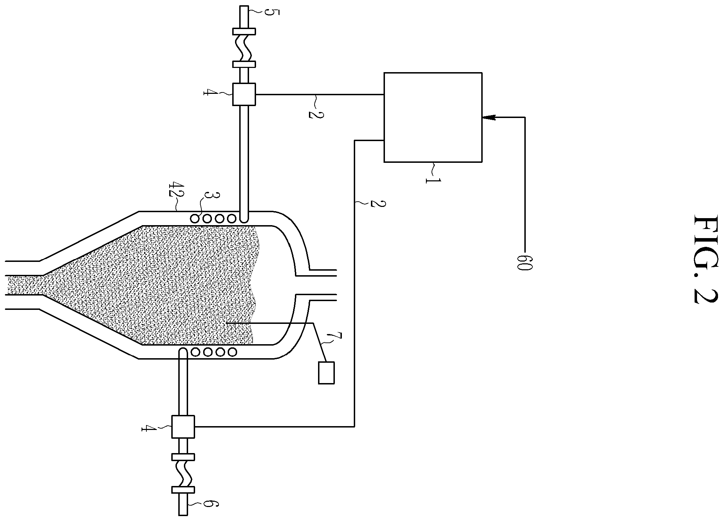

FIG. 2 is a schematic view schematically illustrating a configuration of the heat supply device 50 which is the induction heating device that supplies heat through the induction heating.

First, more specifically, the storage bin 40 may constitute a back-pressure-equalization input device that includes a supply bin 41 which is connected to the conveying device 70 and supplied with the agglomerated reduced iron from the conveying device 70, a back-pressure-equalization bin 42 which is connected to the supply bin 41 and supplied with the agglomerated reduced iron from the supply bin 41, and an input bin 43 which has one end connected to the back-pressure-equalization bin 42 and the other end connected to the gasification melting furnace 10 and supplies the agglomerated reduced iron, which is supplied from the back-pressure-equalization bin 42, to the gasification melting furnace 10.

Referring to FIG. 2, the heat supply device may be installed on the back-pressure-equalization bin 42. Specifically, the heat supply device may include an induction coil 3 which is embedded in a wall of the back-pressure-equalization bin 42, a high-frequency generator 1 which generates high-frequency electric power to be applied to the induction coil 3, and electrically conductive wires 2 and connectors 4 which electrically connect the induction coil 3 and the high-frequency generator 1. In addition, the heat supply device may further include a thermometer 7 inserted into the back-pressure-equalization bin 42 to monitor a temperature of the agglomerated reduced iron in the back-pressure-equalization bin 42.

The induction coil 3 may be made by processing a copper tube in the form of a coil and may be installed and embedded in the refractory wall of the back-pressure-equalization bin 42. In addition, a coolant may be supplied through a coolant supply pipe 5 at one side of the induction coil 3, and the coolant may be discharged through a coolant discharge pipe 6 at the other side of the induction coil 3. In this case, the induction coil 3, the coolant supply pipe 5, and the coolant discharge pipe 6 may be connected through hoses made of a non-conductive material such as rubber.

A process of supplying heat by using the heat supply device, which supplies heat through the induction heating, will be described below in more detail.

In the back-pressure-equalization input device including the supply bin 41, the back-pressure-equalization bin 42, and the input bin 43, when the amount of agglomerated reduced iron in the input bin 43 reaches a lower limit value, the agglomerated reduced iron is inputted into the back-pressure-equalization bin 42 from the supply bin 41. In this case, the input bin 43 is a pressurized state, and the supply bin 41 is adjusted to be in a normal pressure state, such that the agglomerated reduced iron in the normal pressure state is inputted into the back-pressure-equalization bin 42 from the supply bin 41, the back-pressure-equalization bin 42 is then closed, and then nitrogen or the like is injected to pressurize the back-pressure-equalization bin 42 until pressure in the back-pressure-equalization bin 42 reaches pressure in the input bin 43. Meanwhile, the high-frequency electric power generated by the high-frequency generator 1 is supplied to the induction coil 3 at a point in time at which the back-pressure-equalization bin 42 is closed, and the agglomerated reduced iron is heated as the high-frequency electric power flowing through the induction coil 3 generates an electrical resistance heating mechanism caused by a hysteresis loss and a surface eddy current loss in metal iron in the agglomerated reduced iron inputted in the back-pressure-equalization bin 42. A heated state of the agglomerated reduced iron is monitored by the thermometer 7 installed in the back-pressure-equalization bin 42. Therefore, when the temperature of the agglomerated reduced iron reaches a predetermined temperature, the supply of the high-frequency electric power from the high-frequency generator 1 to the induction coil 3 is cut off, whether the pressure in the back-pressure-equalization bin 42 is equal to the pressure in the input bin 43 is checked, and then the agglomerated reduced iron heated in the back-pressure-equalization bin 42 is inputted into the input bin 43.

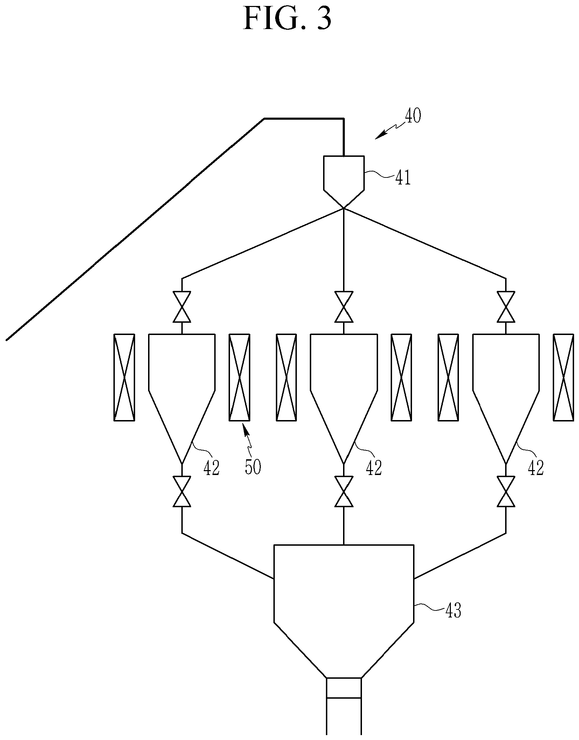

Meanwhile, the number of back-pressure-equalization bins 42 on which the heat supply device 50 for supplying heat through the induction heating is installed is more than one, and the multiple back-pressure-equalization bins 42 may be configured in parallel, as illustrated in FIG. 3. Therefore, in a case in which the amount of molten iron to be produced by the molten iron manufacturing apparatus is large, the multiple back-pressure-equalization bins 42, on which the heat supply devices 50 are installed, are installed in parallel, such that a large amount of agglomerated reduced iron are distributed and heated in parallel, and as a result, it is possible to improve heating efficiency.

In addition, as described above, the mixing device 80 may add the metal-iron-containing substance or the carbon-containing substance into the conveying device 70 at the start position of the conveying device 70. Therefore, the metal-iron-containing substance or the carbon-containing substance having high electrical conductivity is heated by induction heating together with the agglomerated reduced iron during the process of heating the agglomerated reduced iron by induction heating, such that induction heating efficiency may be improved and heating time may be shortened.

The electric power required for the heat supply device 50, which supplies heat through the induction heating, may be obtained by recovering, by using an electric power recovery device 60, energy of high-temperature and high-pressure exhaust gas discharged from one end of the reducing furnace. Specifically, the electric power generating device 60 may include a high-temperature dust collecting device 61 which is connected to one end of the reducing furnace and removes dust in the exhaust gas, an expansion turbine 62 which is connected to the high-temperature dust collecting device, expands the exhaust gas from the dust is removed, and generates rotational force, an electric generator 63 which is connected to the expansion turbine and converts the rotational force into electrical energy, and an electric transformer 64 which has one end connected to the electric generator and the other end connected to the high-frequency generator, adjusts a voltage, and supplies the electrical energy to the high-frequency generator.

Therefore, dust included in the high-temperature and high-pressure exhaust gas discharged from one end of the reducing furnace is removed by the high-temperature dust collecting device 61, and then the high-temperature and high-pressure exhaust gas from which the dust is removed is expanded by the expansion turbine 62, such that rotational force may be generated and the rotational force may be used. Thereafter, the electric generator 63 may convert the rotational force into electrical energy and thus recover energy in the form of electrical energy, the voltage of the electrical energy may be adjusted by the electric transformer 64, and the electrical energy may be supplied to the high-frequency generator 1 that supplies the high-frequency electric power to the induction coil 3 for the induction heating.

Another aspect of the present invention provides a molten iron manufacturing method including: manufacturing reduced iron by inputting iron ore into a reducing furnace; manufacturing agglomerated reduced iron by agglomerating the reduced iron; supplying heat to the agglomerated reduced iron; and manufacturing molten iron by supplying the heated agglomerated reduced iron and a lump carbon material to the gasification melting furnace, and supplying generated reducing gas to the reducing furnace.

With the supplying of the heat to the agglomerated reduced iron, it is possible to compensate for a thermal loss of the reduced iron that occurs while the agglomerated reduced iron is conveyed to the storage bin 40 and the gasification melting furnace 10 of the molten iron manufacturing apparatus. Therefore, it is possible to prevent the aforementioned increase in fuel costs caused by an increase in fuel required for the gasification melting furnace 10.

The supplying of the heat to the agglomerated reduced iron includes supplying heat by induction heating. In the induction heating, the agglomerated reduced iron may be heated as the high-frequency electric power generated by the high-frequency generator 1 is supplied to the induction coil 3 such that the high-frequency electric power flowing through the induction coil 3 causes the electrical resistance heating mechanism caused by a hysteresis loss and a surface eddy current loss in metal iron in the agglomerated reduced iron.

In addition, the molten iron manufacturing method further includes mixing a metal-iron-containing substance or a carbon-containing substance with the agglomerated reduced iron prior to the supplying of the heat to the agglomerated reduced iron. Therefore, the metal-iron-containing substance or the carbon-containing substance having electrical conductivity is heated by induction heating together with the agglomerated reduced iron during the process of heating the agglomerated reduced iron by induction heating, such that induction heating efficiency may be improved and heating time may be shortened.

Here, the mixed amount of the metal-iron-containing substance or the carbon-containing substance may be equal to or less than 5 weight % based on 100 weight % of a total amount of the agglomerated reduced iron. If the mixed amount of metal-iron-containing substance or carbon-containing substance is too large, there may occur a problem in that the supply amount of agglomerated reduced iron is less than the target amount required to produce molten iron.

The supplying of the heat to the agglomerated reduced iron through the induction heating may use energy, as an energy source, which is recovered from the exhaust gas generated by the manufacturing of the reduced iron by inputting the iron ore into the reducing furnace.

More specifically, the energy recovered from the exhaust gas may be recovered as electrical energy by converting energy generated by the expansion of the exhaust gas into rotational force and then converting the rotational force into the electrical energy. Thereafter, the recovered electrical energy may be used as an energy source by being applied to the high-frequency generator that applies the high-frequency electric power to the induction coil for the induction heating.

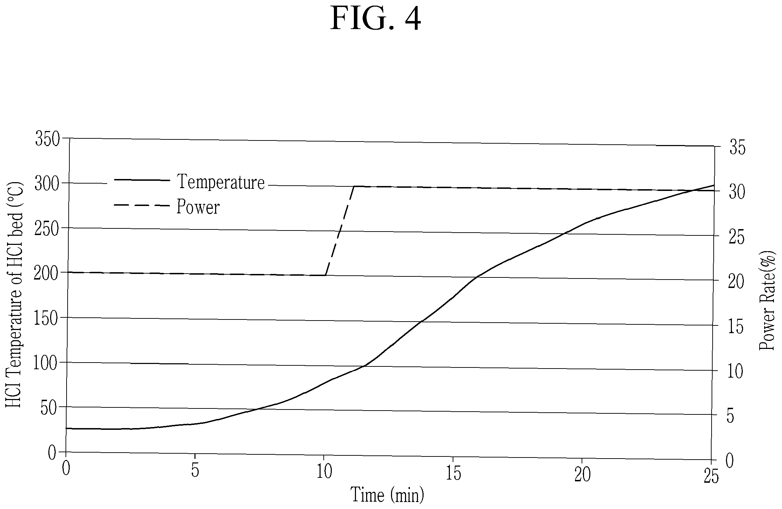

FIG. 4 illustrates a result of heating an agglomerated reduced iron (HCI) packed bed of 2 kg while adjusting an output from an induction heating furnace having a capacity of about 10 kW. It can be seen that a temperature is raised by about 200°C within 20 minutes in an output range of about 20 to 30%, that is, 2 to 3 kW. Further, it is ascertained that a temperature raising speed is increased in accordance with an increase in output. This result shows that the agglomerated reduced iron may be effectively heated in a short time by the molten iron manufacturing apparatus and the molten iron manufacturing method according to the exemplary embodiment of the present invention.

Meanwhile, the electrical energy required for the induction heating is supplied by recovering, by the apparatus according to the present invention, the energy of the high-temperature and high-pressure exhaust gas discharged from one end of the fluidized reduction furnace, and as a result, the agglomerated reduced iron may be heated without additionally supplying external electric power.

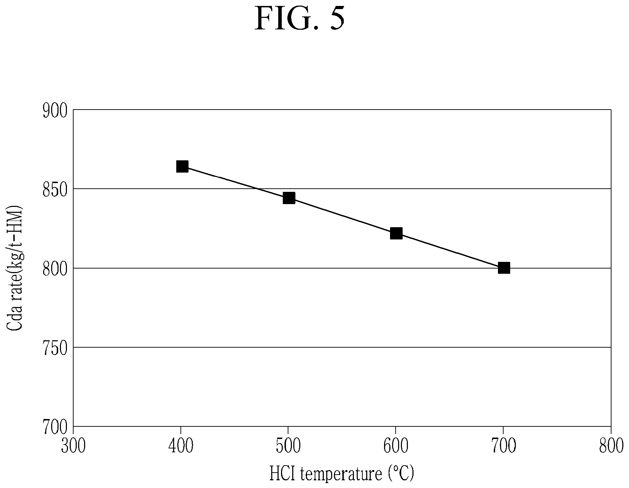

FIG. 5 illustrates that consumption of coal required to manufacture molten iron is reduced because the agglomerated reduced iron (HCI) is heated and inputted into the gasification melting furnace as described above. This result is derived from working experiences and thermal analyses performed on the gasification melting furnace, and this result shows that a rate of consumption of coal required to produce one ton of molten iron is reduced by about 20 kg each time the temperature of the agglomerated reduced iron is raised by 100°C.

According to the molten iron manufacturing apparatus and the molten iron manufacturing method according to the present invention, it is possible to reduce coal consumption in the gasification melting furnace by recovering and using energy which was wasted from a molten iron manufacturing apparatus in the related art.

Therefore, it is possible to obtain the effect of improving working efficiency of the molten iron manufacturing apparatus directly using fine iron ore and reducing working costs.

While this invention has been described in connection with what is presently considered to be practical exemplary embodiments, it is to be understood that the invention is not limited to the disclosed embodiments, the protection scope is defined in the appended claims.

**<Description of symbols>**

| | | | |
|---|---|---|---|
| 1 : | High-frequency generator | 2 : | Electrically conductive wire |
| 3 : | Induction coil | 4 : | Connector |
| 5 : | Coolant supply pipe | 6 : | Coolant discharge pipe |
| 7 : | Thermometer | 10 : | Gasification melting furnace |
| 12 : | Reducing gas line | 20 : | Reducing furnace |
| 30 : | Agglomeration device | 40 : | Storage bin |
| 41 : | Supply bin | 42 : | Back-pressure-equalization bin |
| 43 : | Input bin | 50 : | Induction heating device |
| 60 : | Electric power generating device | | |
| 61 : | High-temperature dust collecting device | | |
| 62 : | Expansion turbine | 63 : | Electric generator |
| 64 : | Electric transformer | 70 : | Conveying device |
| 80 : | Mixing device | | |

## Claims

1. A molten iron manufacturing apparatus comprising:
a gasification melting furnace (10) into which reduced iron and a lump carbon material are inputted to manufacture molten iron;
a reducing furnace (20) which is connected to the gasification melting furnace (10) and manufactures reduced iron powder from fine iron ore by using reducing gas discharged from the gasification melting furnace;
a storage bin (40) which is connected to the gasification melting furnace (10) and provides the reduced iron to the gasification melting furnace;
a heat supply device (50) which is installed on the storage bin (40) and supplies heat to the reduced iron in the storage bin; and
a mixing device (80) connected to a conveying device (70) for adding a metal-iron-containing substance or a carbon-containing substance to the conveying device (70) wherein the heat supply device (50) supplies heat to the reduced iron in the storage bin (40) through induction heating,
wherein the heat supply device (50) includes:
an induction coil (3) which is embedded in a wall of the storage bin (40);
a high-frequency generator which produces high-frequency electric power to be applied to the induction coil (3); and
an electrically conductive wire and a connector which electrically connect the induction coil and the high-frequency generator.

2. The molten iron manufacturing apparatus of claim 1, further comprising:
an agglomeration device (30) which is connected to the reducing furnace (20), agglomerates the reduced iron powder discharged from the reducing furnace (20), and supplies the agglomerated reduced iron to the storage bin (40).

3. The molten iron manufacturing apparatus of claim 2, wherein:
the conveying device (70) has one end connected to the agglomeration device (30) and the other end connected to the storage bin (40) and conveys the agglomerated reduced iron from the agglomeration device (30) to the storage bin (40).

4. The molten iron manufacturing apparatus of claim 1, wherein:
the heat supply device (50) further includes:
a coolant supply pipe (5) which is connected to one end of the induction coil (3); and
a coolant discharge pipe (6) which is connected to the other end of the induction coil (3).

5. The molten iron manufacturing apparatus of claim 1, further comprising:
an electric power generating device (60) which is connected to the high-frequency generator (1) and produces electric power by recovering energy of exhaust gas discharged from one end of the reducing furnace (20).

6. The molten iron manufacturing apparatus of claim 5, wherein:
the electric power generating device includes:
a high-temperature dust collecting device (61) which is connected to one end of the reducing furnace (20) and removes dust in the exhaust gas;
an expansion turbine (62) which is connected to the high-temperature dust collecting device (61), expands the exhaust gas from which the dust is removed, and generates rotational force;
an electric generator (63) which is connected to the expansion turbine (62) and converts the rotational force into electrical energy; and
an electric transformer (64) which has one end connected to the electric generator (63) and the other end connected to the high-frequency generator (1), adjusts a voltage, and supplies the electrical energy to the high-frequency generator (1).

7. The molten iron manufacturing apparatus of claim 3, wherein:
the storage bin (40) includes:
a supply bin (41) which is connected to the conveying device (70) and supplied with the agglomerated reduced iron from the conveying device (70);
a back-pressure-equalization bin (42) which is connected to the supply bin (41) and supplied with the agglomerated reduced iron from the supply bin (41); and
an input bin (43) which has one end connected to the back-pressure-equalization bin (42) and the other end connected to the gasification melting furnace (10) and supplies the agglomerated reduced iron, which is supplied from the back-pressure-equalization bin (42), to the gasification melting furnace (10).

8. The molten iron manufacturing apparatus of claim 7, wherein:
the heat supply device (50) is installed on the back-pressure-equalization bin (42) and supplies heat to the agglomerated reduced iron in the back-pressure-equalization bin (42).

9. The molten iron manufacturing apparatus of claim 8, wherein:
the number of back-pressure-equalization bins (42) is more than one and the multiple back-pressure-equalization bins are positioned in parallel and each have one end connected to the supply bin (41) and the other end connected to the input bin (43).

10. A molten iron manufacturing method comprising:
manufacturing reduced iron by inputting iron ore into a reducing furnace (20);
manufacturing agglomerated reduced iron by agglomerating the reduced iron;
mixing a metal-iron-containing substance or a carbon-containing substance with the agglomerated reduced iron prior to the supplying of the heat to the agglomerated reduced iron;
supplying heat to the agglomerated reduced iron; and
manufacturing molten iron by supplying the heated agglomerated reduced iron and a lump carbon material to a gasification melting furnace (10), and supplying generated reducing gas to the reducing furnace (20),
wherein the supplying of the heat to the agglomerated reduced iron includes supplying high-frequency electric power produced by a high-frequency generator to the induction coil (3) and
heating reduced iron by high-frequency electric power applied to the induction coil (3).

11. The molten iron manufacturing method of claim 10, wherein:
the supplying of the heat to the agglomerated reduced iron uses energy, as an energy source, which is recovered from exhaust gas generated in the manufacturing of the reduced iron by inputting the iron ore into the reducing furnace (20).

12. The molten iron manufacturing method of claim 11, wherein:
the energy recovered from the exhaust gas is recovered as electrical energy by converting energy generated by expansion of the exhaust gas into rotational force and then converting the rotational force into electrical energy.

## Patentansprüche

1. Herstellungsvorrichtung für Eisenschmelze, umfassend:
einen Vergasungsschmelzofen (10), in den reduziertes Eisen und Stückkohlezum Herstellen von Eisenschmelze eingebracht werden;
einen Reduktionsofen (20), der mit dem Vergasungsschmelzofen (10) verbunden ist und reduziertes Eisenpulver aus feinem Eisenerz unter Verwendung von Reduktionsgas herstellt, das aus dem Vergasungsschmelzofen (10) abgegeben wird;
einen Lagerbehälter (40), der mit dem Vergasungsschmelzofen (10) verbunden ist und das reduzierte Eisen an den Vergasungsschmelzofen bereitstellt;
eine Wärmezufuhreinrichtung (50), die an dem Lagerbehälter (40) installiert ist und dem reduzierten Eisen in dem Lagerbehälter Wärme zuführt; und
eine Mischeinrichtung (80), die mit einer Fördereinrichtung (70) zum Hinzufügen einer eisenmetallhaltigen Substanz oder einer kohlhaltigen Substanz zu der Fördereinrichtung (70) verbunden ist,
wobei die Wärmezufuhreinrichtung (50) dem reduzierten Eisen in dem Lagerbehälter (40) Wärme durch Induktionserwärmung zuführt;
wobei die Wärmezufuhreinrichtung (50) beinhaltet:
eine Induktionsspule (3), die in eine Wand des Lagerbehälters (40) eingebettet ist;
einen Hochfrequenzgenerator, der elektrische Hochfrequenzleistung erzeugt, die an die Induktionsspule (3) angelegt werden soll; und
einen elektrisch leitfähigen Draht und eine Verbindung, welche die Induktionsspule und den Hochfrequenzgenerator elektrisch verbinden.

2. Herstellungsvorrichtung für Eisenschmelze nach Anspruch 1, ferner umfassend:
eine Agglomerationseinrichtung (30), die mit dem Reduktionsofen (20) verbunden ist, das aus dem Reduktionsofen (20) abgegebene reduzierte Eisenpulver agglomeriert und das agglomerierte reduzierte Eisen dem Lagerbehälter (40) zuführt.

3. Herstellungsvorrichtung für Eisenschmelze nach Anspruch 2, wobei:
bei der Fördereinrichtung (70) ein Ende mit der Agglomerationseinrichtung (30) verbunden ist und das andere Ende mit dem Lagerbehälter (40) verbunden ist und die das agglomerierte reduzierte Eisen von der Agglomerationseinrichtung (30) zu dem Lagerbehälter (40) befördert.

4. Herstellungsvorrichtung für Eisenschmelze nach Anspruch 1, wobei:
die Wärmezufuhreinrichtung (50) ferner beinhaltet:
ein Kühlmittelzufuhrrohr (5), das mit einem Ende mit der Induktionsspule (3) verbunden ist;
und
ein Kühlmittelausgangsrohr (6), das mit dem anderen Ende mit der Induktionsspule (3) verbunden ist.

5. Herstellungsvorrichtung für Eisenschmelze nach Anspruch 1, ferner umfassend:
eine Erzeugungsvorrichtung für elektrische Leistung (60), die mit dem Hochfrequenzgenerator (1) verbunden ist und elektrische Leistung durch Rückgewinnen von Energie aus Abgas, das aus einem Ende des Reduktionsofens (20) abgegeben wird, erzeugt.

6. Herstellungsvorrichtung für Eisenschmelze nach Anspruch 5, wobei:
die Erzeugungsvorrichtung für elektrische Leistung beinhaltet:
eine Hochtemperatur-Staubsammeleinrichtung (61), die mit einem Ende des Reduktionsofens (20) verbunden ist und Staub im Abgas entfernt;
eine Expansionsturbine (62), die mit der Hochtemperatur-Staubsammeleinrichtung (61) verbunden ist, worin das Abgas, aus dem der Staub entfernt ist, expandiert und Drehkraft generiert wird;
einen Elektrogenerator (63), der mit der Expansionsturbine (62) verbunden ist und die Drehkraft in elektrische Energie umwandelt; und
einen Elektrotransformator (64), bei dem ein Ende mit dem Elektrogenerator (63) verbunden ist und das andere Ende mit dem Hochfrequenzgenerator (1) verbunden ist, der eine Spannung generiert und der dem Hochfrequenzgenerator (1) die elektrische Energie zuführt.

7. Herstellungsvorrichtung für Eisenschmelze nach Anspruch 3, wobei:
der Lagerbehälter (40) beinhaltet:
einen Zufuhrbehälter (41), der mit der Fördereinrichtung (70) verbunden ist und dem das agglomerierte reduzierte Eisen aus der Fördereinrichtung (70) zugeführt wird;
einen Gegendruckausgleichsbehälter (42), der mit dem Zufuhrbehälter (41) verbunden ist und dem das agglomerierte reduzierte Eisen aus dem Zufuhrbehälter (41) zugeführt wird; und
einen Eingangsbehälter (43), bei dem ein Ende mit dem Gegendruckausgleichsbehälter (42) verbunden ist und das andere Ende mit dem Vergasungsschmelzofen (10) verbunden ist und der das agglomerierte reduzierte Eisen, das von dem Gegendruckausgleichsbehälter (42) zugeführt wird, dem Vergasungsschmelzofen (10) zuführt.

8. Herstellungsvorrichtung für Eisenschmelze nach Anspruch 7, wobei:
die Wärmezufuhreinrichtung (50) an dem Gegendruckausgleichsbehälter (42) installiert ist und dem agglomerierten reduzierten Eisen in dem Gegendruckausgleichsbehälter (42) Wärme zuführt.

9. Herstellungsvorrichtung für Eisenschmelze nach Anspruch 8, wobei:
die Anzahl von Gegendruckausgleichsbehältern (42) mehr als eins beträgt und die mehreren Gegendruckausgleichsbehälter parallel positioniert sind und bei ihnen jeweils ein Ende mit dem Zufuhrbehälter (41) und das andere Ende mit dem Eingangsbehälter (43) verbunden ist.

10. Herstellungsverfahren für Eisenschmelze, umfassend:
Herstellen von reduziertem Eisen durch Einbringen von Eisenerz in einen Reduktionsofen (20);
Herstellen von agglomeriertem reduziertem Eisen durch Agglomerieren des reduzierten Eisens;
Mischen einer eisenmetallhaltigen Substanz oder einer kohlehaltigen Substanz mit dem agglomerierten reduzierten Eisen vor dem Zuführen der Wärme zu dem agglomerierten reduzierten Eisen;
Zuführen von Wärme zu dem agglomerierten reduzierten Eisen; und
Herstellen von Eisenschmelze durch Zuführen des erwärmten agglomerierten reduzierten Eisens und der Stückkohle zu einem Vergasungsschmelzofen (10) und Zuführen von erzeugtem Reduktionsgas zu dem Reduktionsofen (20),
wobei das Zuführen der Wärme zu dem agglomerierten reduzierten Eisen beinhaltet
Zuführen von durch einen Hochfrequenzgenerator erzeugter elektrischer Hochfrequenzleistung zu der Induktionsspule (3) und
Erwärmen von reduziertem Eisen durch an die Induktionsspule (3) angelegte elektrische Hochfrequenzleistung.

11. Herstellungsvorrichtung für Eisenschmelze nach Anspruch 10, wobei:
das Zuführen der Wärme zu dem agglomerierten reduzierten EisenWärmeenergie als eine Energie verwendet, die aus Abgas rückgewonnen wird, das bei der Herstellung des reduzierten Eisens durch Einbringe des Eisenerzes in den Reduktionsofen (20) erzeugt wird.

12. Herstellungsvorrichtung für Eisenschmelze nach Anspruch 11, wobei:
die aus dem Abgas rückgewonnene Energie als elektrische Energie rückgewonnen wird, indem durch Expansion des Abgases erzeugte Energie in Drehkraft umgewandelt wird und dann die Drehkraft in elektrisch Energie umgewandelt wird.

## Revendications

1. Appareil de fabrication de fer fondu comprenant :
un four de fusion et de gazéification (10) dans lequel du fer réduit et un matériau de carbone en morceau sont introduits pour fabriquer du fer fondu ;
un four de réduction (20) qui est relié au four de fusion et de gazéification (10) et fabrique de la poudre de fer réduit à partir de fines de minerai de fer en utilisant un gaz réducteur évacué depuis le four de fusion et de gazéification ;
un silo de stockage (40) qui est relié au four de fusion et de gazéification (10) et fournit le fer réduit au four de fusion et de gazéification ;
un dispositif d'alimentation en chaleur (50) qui est installé sur le silo de stockage (40) et alimente en chaleur le fer réduit dans le silo de stockage ; et
un dispositif de mélange (80) relié à un dispositif de transport (70) pour ajouter une substance contenant du fer métal ou une substance contenant du carbone au dispositif de transport (70),
dans lequel le dispositif d'alimentation en chaleur (50) alimente en chaleur de fer réduit dans le silo de stockage (40) par le biais d'un chauffage par induction,
dans lequel le dispositif d'alimentation en chaleur (50) comporte :
une bobine d'induction (3) qui est incorporée dans une paroi du silo de stockage (40) ;
un générateur haute fréquence qui produit de la puissance électrique haute fréquence à appliquer à la bobine d'induction (3) ; et
un fil électriquement conducteur et un connecteur qui relient électriquement la bobine d'induction et le générateur haute fréquence.

2. Appareil de fabrication de fer fondu selon la revendication 1, comprenant en outre :
un dispositif d'agglomération (30) qui est relié au four de réduction (20), agglomère la poudre de fer réduit évacuée depuis le four de réduction (20), et alimente en fer réduit aggloméré le silo de stockage (40).

3. Appareil de fabrication de fer fondu selon la revendication 2, dans lequel :
le dispositif de transport (70) a une extrémité reliée au dispositif d'agglomération (30) et l'autre extrémité reliée au silo de stockage (40) et transporte le fer réduit aggloméré du dispositif d'agglomération (30) au silo de stockage (40).

4. Appareil de fabrication de fer fondu selon la revendication 1, dans lequel :
le dispositif d'alimentation en chaleur (50) comporte en outre :
un tuyau d'alimentation en liquide de refroidissement (5) qui est relié à une extrémité de la bobine d'induction (3) ; et
un tuyau d'évacuation de liquide de refroidissement (6) qui est relié à l'autre extrémité de la bobine d'induction (3).

5. Appareil de fabrication de fer fondu selon la revendication 1, comprenant en outre :
un dispositif de génération de puissance électrique (60) qui est relié au générateur haute fréquence (1) et produit de la puissance électrique en récupérant de l'énergie d'un gaz d'échappement évacué depuis une extrémité du four de réduction (20).

6. Appareil de fabrication de fer fondu selon la revendication 5, dans lequel :
le dispositif de génération de puissance électrique comporte :
un dispositif de collecte de poussière à haute température (61) qui est relié à une extrémité du four de réduction (20) et élimine de la poussière dans le gaz d'échappement ;
une turbine de détente (62) qui est reliée au dispositif de collecte de poussière à haute température (61), détend le gaz d'échappement duquel la poussière est éliminée, et génère une force de rotation ;
un générateur électrique (63) qui est relié à la turbine de détente (62) et convertit la force de rotation en énergie électrique ; et
un transformateur électrique (64) qui a une extrémité reliée au générateur électrique (63) et l'autre extrémité reliée au générateur haute fréquence (1), ajuste une tension, et alimente en énergie électrique le générateur haute fréquence (1).

7. Appareil de fabrication de fer fondu selon la revendication 3, dans lequel :
le silo de stockage (40) comporte :
un silo d'alimentation (41) qui est relié au dispositif de transport (70) et alimenté en fer réduit aggloméré depuis le dispositif de transport (70) ;
un silo d'égalisation de contre-pression (42) qui est relié au silo d'alimentation (41) et alimenté en fer réduit aggloméré depuis le silo d'alimentation (41) ; et
un silo d'introduction (43) qui a une extrémité reliée au silo d'égalisation de contre-pression (42) et l'autre extrémité reliée au four de fusion et de gazéification (10) et alimente en fer réduit aggloméré, qui est fourni depuis le silo d'égalisation de contre-pression (42), le four de fusion de gazéification (10).

8. Appareil de fabrication de fer fondu selon la revendication 7, dans lequel :
le dispositif d'alimentation en chaleur (50) est installé sur le silo d'égalisation de contre-pression (42) et alimente en chaleur le fer réduit aggloméré dans le silo d'égalisation de contre-pression (42).

9. Appareil de fabrication de fer fondu selon la revendication 8, dans lequel :
le nombre de silos d'égalisation de contre-pression (42) est supérieur à un et les multiples silos d'égalisation de contre-pression sont positionnés en parallèle et ont chacun une extrémité reliée au silo d'alimentation (41) et l'autre extrémité reliée au silo d'introduction (43).

10. Procédé de fabrication de fer fondu comprenant :
la fabrication de fer réduit en introduisant du minerai de fer dans un four de réduction (20) ;
la fabrication de fer réduit aggloméré en agglomérant le fer réduit ;
le mélange d'une substance contenant du fer métal ou d'une substance contenant du carbone avec le fer réduit aggloméré avant l'alimentation en chaleur du fer réduit aggloméré ;
l'alimentation en chaleur du fer réduit aggloméré ; et
la fabrication de fer fondu en alimentant en fer réduit aggloméré chauffé et en matériau de carbone en morceau un four de fusion et de gazéification (10), et en alimentant en gaz réducteur généré le four de réduction (20),
dans lequel l'alimentation en chaleur du fer réduit aggloméré comporte
l'alimentation en puissance électrique haute fréquence produite par un générateur haute fréquence de la bobine d'induction (3) et
le chauffage du fer réduit par la puissance électrique haute fréquence appliquée à la bobine d'induction (3).

11. Procédé de fabrication de fer fondu selon la revendication 10, dans lequel :
l'alimentation en chaleur du fer réduit aggloméré utilise de l'énergie, en tant que source d'énergie, qui est récupérée d'un gaz d'échappement généré lors de la fabrication du fer réduit en introduisant le minerai de fer dans le four de réduction (20).

12. Procédé de fabrication de fer fondu selon la revendication 11, dans lequel :
l'énergie récupérée du gaz d'échappement est récupérée en tant qu'énergie électrique par conversion d'énergie générée par détente du gaz d'échappement en force de rotation puis conversion de la force de rotation en énergie électrique.
